# EUROPEAN PATENT SPECIFICATION

(11) **EP 0 320 851 B1**
(45) Date of publication and mention of the grant of the patent: **22.06.1994**
(21) Application number: 88120740.1
(22) Date of filing: 12.12.1988
(51) Int. Cl.: G11B 33/14, G11B 15/61

(54) **Condensation preventing apparatus**
Kondensations-Verhinderungsgerät
Appareil empêchant la condensation

(30) Priority: 14.12.1987 JP 317832/87
(43) Date of publication of application: 21.06.1989
(73) Proprietor: MITSUBISHI DENKI KABUSHIKI KAISHA, Tokyo 100 (JP)
(72) Inventor: Yamasaki, Hidenori c/o Mitsubishi Denki K.K., Sanda-shi Hyogo-669-13 (JP); Matsumoto, Katsuaki c/o Mitsubishi Denki K.K., Sanda-shi Hyogo 669-13 (JP); Osuga, Yoshiharu c/o Mitsubishi Denki K.K., Nagaokakyo-shi Hyogo 617 (JP)
(74) Representative: Strehl Schübel-Hopf Groening & Partner

(56) References cited:
- EP-A- 0 200 536
- DE-B- 1 959 327
- GB-A- 1 507 568
- US-A- 3 860 959
- PATENT ABSTRACTS OF JAPAN vol. 12, no. 199 (P-714)(3046) 09 June 1988, & JP-A-63 843 (CLARION CO.) 05 January 1988,
- PATENT ABSTRACTS OF JAPAN vol. 9, no. 58 (P-341)(1781) 14 March 1985, & JP-A-59 193562 (SONY) 02 November 1984,88,
- PATENT ABSTRACTS OF JAPAN vol. 7, no. 241 (P-232)(1386) 26 October 1983, & JP-A-58 128038 (HITACHI SEISAKUSHO) 30 July 1983,
- PATENT ABSTRACTS OF JAPAN vol. 7, no. 290 (P-245)(1435) 24 December 1983, & JP-A-58 164049 (SANYO DENKI) 28 September 1983,
- PATENT ABSTRACTS OF JAPAN vol. 7, no. 168 (P-212)(1313) 23 July 1983, & JP-A-58 73032 (CANON) 02 May 1983,

## Description

The invention relates to a condensation preventing apparatus for preventing a magnetic tape from sticking to a rotary drum due to condensation on the drum surface.

The description of a condensation preventing apparatus is published in Patent Abstracts of Japan, Vol. 9, No. 58 (P-134)(1781) March 14th, 1985.

This known apparatus comprises temperature detecting means for detecting the temperature of a drum, condensation detecting means for detecting the condensation on this drum and control means. A magnetic tape wound round the drum is unloaded or the loading of this tape is prevented, when either condensation on the drum or a temperature of the drum is detected, which temperature is lower than a prescribed level. Then, the drum is revolved to raise its temperature or to eliminate the condensation.

Usually, such a drum is combined with a head for writing or reading information on or from the tape (EP-A-0 200 536).

Condensation frequently occurs in automobiles in which the environmental condition can vary not only greatly, but also frequently.

The above-mentioned apparatus of the prior art for preventing the condensation condition cannot reduce the frequency of condensation.

It is the aim of the present invention to overcome the drawbacks of the prior art and to provide a storing and reproducing apparatus in which the chance of condensation is reduced and the drum surface and the proximity of the head are dried in a short time in case condensation has occured.

This aim is solved by the apparatus of claim 1.

Other objects and advantages of the invention will be more apparent from the following specification and the drawings in which:
Fig. 1 is a block diagram showing a general arrangement of an embodiment of the present invention;
Fig. 2 is a perspective view of the major portion of the invention; and
Fig. 3 is a flowchart of a microcomputer used in the invention.

The present invention will now be described in detail with reference to the drawings.

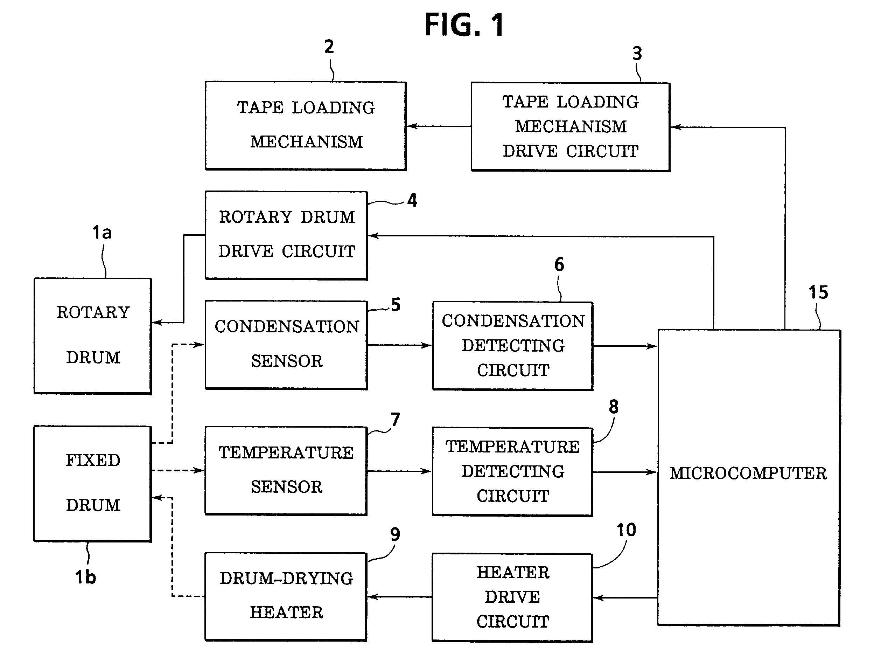

Fig. 1 is a block diagram for showing an apparatus for preventing condensation according to the present invention. The invention differs from the prior art apparatus shown in Fig. 5 in that a temperature sensor 7 and a temperature detecting circuit 8 are provided in the present invention. The temperature sensor 7 outputs a low temperature signal to a microcomputer 15 when the temperature is below a predetermined value. The microcomputer 15, in turn, actuates a heater drive circuit 10 to operate, initiating supplying of electric power to a drum drying heater 9. Thus the heater 9 also serves to keep the surface of the drum 1a warm. Also, when the surface temperature of the drum has reached the predetermined value, the microcomputer 15 outputs a command, indicative of stoppage of supply of the electric power to the drum-drying heater 9, to the heater drive circuit 10 on the basis of signals form the temperature sensor 7 and the temperature detecting circuit 8.

The operations of the condensation sensor 5, the condensation detection circuit 6, the tape loading mechanism 2, the tape loading mechanism drive circuit 3, the rotary drum drive circuit 4, and the rotary drum 1a are similar to those in the prior art.

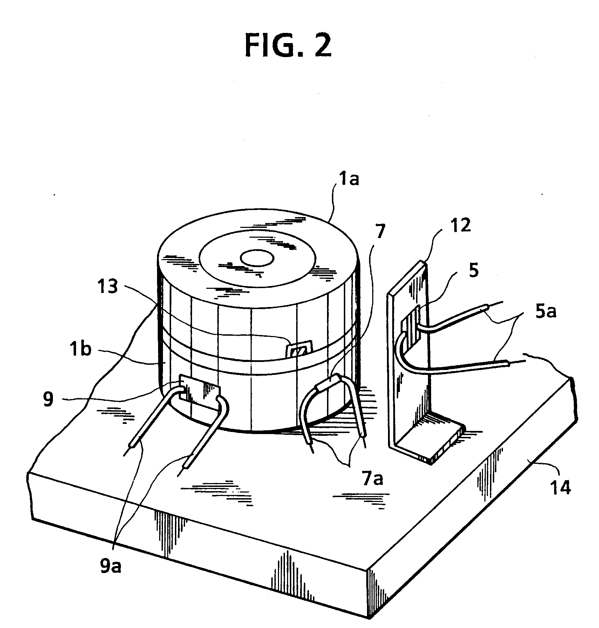

Fig. 2 shows a perspective view of the apparatus in Fig. 1. In Fig. 2, to the fixed drum 1b are attached the temperature sensor 7 having lead Wires 7a and the drum drying-heater 9 having lead wires 9a on a portion remote from the side at which the tape is to be loaded. The condensation sensor 5 having lead wires 5a is attached to a holder 12 which is provided near the rotary drum 1a. A deck base 14 supports the holder 12, the fixed drum 1b, and the rotary drum 1a provided thereon. A magnetic head 13 is mounted on the rotary drum 1a.

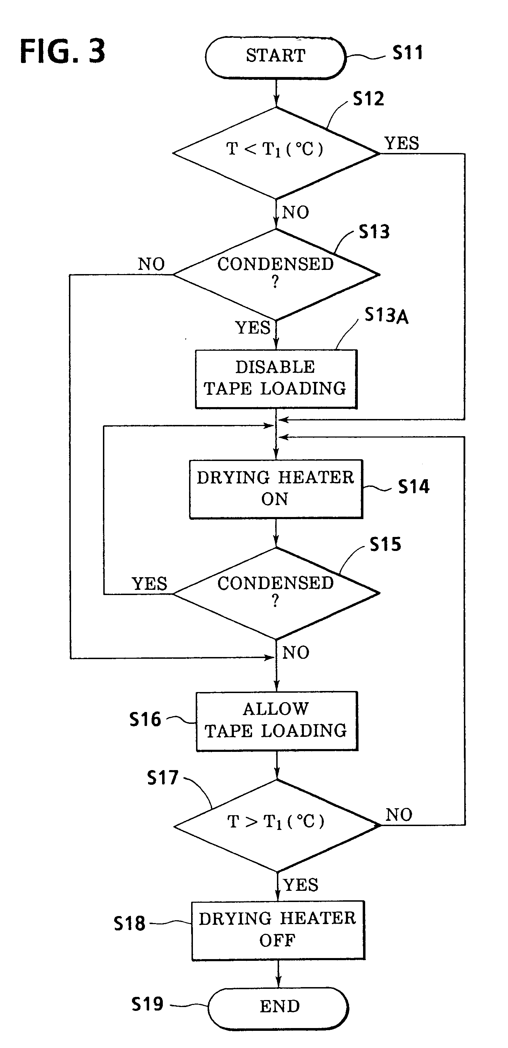

The operation of the present invention will now be described with reference to a flowchart in Fig. 3. The apparatus is switched on at a start point S11 but has not been in storage or reproduction mode yet. When the sensor 7 detects that the surface temperature of the fixed drum 1b is below a predetermined threshold temperature T1 °C and the temperature detecting circuit 8 sends a low temperature signal to a microcomputer 15, the drying-heater 9 is energized to heat the drum 1a and 1b at S14. If the temperature is above the predetermined temperature T1 °C, a decisionon is made based on whether or not a condensation signal is present at S13. If the condensation signal is present at S13, then loading of the magnetic tape is disabled at step S13A and at step 14 the drying-heater 9 operates to dry up the drums 1a and 1b. Then, a decision is again made based on whether or not the condensation exists at step S15 and if the condensation exists, the dying-heater 9 is energized to continuously heat the drums at S14. If the condensation does not exists, i.e., the drums are in dry condition, then the microcomputer waits for a tape loading command which commands operation to wrap the magnetic tape around the rotary drum 1a at S16. Then at S17, if the temperature is above the predetermined temperature T1 °C, the supply of electric power to the heater 9 is stopped at step S18. If the temperature is below the predetermined temperature T1 °C, then the procedure returns to step S14 to continue supply of electric energy to the drying heater 9. The operation completes at the terminal point S19. In the means time, if the condensation is not detected at step S13, then the procedure proceeds to S16 thereby allowing loading of the magnetic tape. Additionally, the condensation preventing apparatus is arranged in such a way that the tape loading mechanism 2 is driven to draw the magnetic tape from the head 13 thereby causing the magnetic storage and reproduction apparatus to return to a standby state thereof if condensation occurs while the magnetic storage and reproduction apparatus is in operation. While the prior art apparatus permits the heater to operates only after the condensation has occurred, the embodiment mentioned above operates to warm up the head so that the temperature around the head is above the predetermined temperature T1 °C. Thus effect is that occurence of condensation is prevented. Also even if the condensation occurs the temperature around the head is above the predetermined temperature T1 °C; therefore the time required for heating and drying is shorter than the prior art, permitting quick return to the state in which tape loading is allowed. Condensation tends to occur when warm air flow suddenly into the vicinity of the magnetic storage and reproduction apparatus at low temperature when a heater system operates to cause a rapid rise in temperature in a car room during winter time or when highly humid air invades, due to an open door, into an air conditioned car room in a rainy season.

The drum temperature has not been specified in the aforementioned embodiment, but the threshold temperature at which the heater is caused to operate may be set to a temperature in the range of 0 to 30 °C. Although the temperature sensor 7 is attached, as shown in Fig. 2, to the fixed drum 1b, it may also be mounted on an electric circuit board near the drum.

## Claims

1. Condensation preventing apparatus comprising:
- a drum(1a,1b),
- loading means(2,3) for loading a storage medium onto said drum and for unloading said storage medium from said drum(1a,1b),
- a head(13) for writing information on the storage medium and for reading the information from the storage medium when the storage medium is loaded on said drum(1a,1b),
- temperature detecting means(7) provided in the vicinity of said head(13) for detecting the temperature of said drum(1a,1b) and of said head(13),
- condensation detecting means(5) provided in the vicinity of said head(13) for detecting condensation on the drum(1a,1b) and on the head(13),
- a radiation heater(9) for heating said drum(1a,1b) and said head(13), and
- control means(15) responsively connected to said temperature detecting means(7) and said condensation detecting means(5) and operatively connected to said loading means(2,3) and said radiant heater(9),
- said control means(15) activating said radiant heater(9) and preventing at the same time said loading means(2,3) from loading said storage medium or causing said loading means(2,3) to unload said storage medium when said condensation detecting means(5) detects condensation, but
- when said condensation detecting means(5) does not detect any condensation, but said temperature detecting means(7) detects a temperature below a predetermined temperature, said control means(15) activating said radiant heater(9) without preventing said loading means(2,3) from loading said storage medium or without causing said loading means(2,3) to unload said storage medium.

2. Condensation preventing apparatus according to claim 1, wherein said predetermined temperature is between 0°C and +30°C.

3. Condensation preventing apparatus according to claim 1, wherein said storage medium is a tape.

## Patentansprüche

1. Gerät zum Verhindern von Kondensation mit:
- einer Trommel (1a, 1b),
- einer Ladeeinrichtung (2, 3) zum Aufbringen eines Speichermediums auf die Trommel und zum Abnehmen des Speichermediums von der Trommel (1a, 1b),
- einem Kopf (13) zum Schreiben von Information auf das Speichermedium und zum Lesen von Information von dem Speichermedium, wenn das Speichermedium auf die Trommel (1a, 1b) aufgebracht ist,
- einer in der Nähe des Kopfes (13) vorgesehenen Temperaturerfassungseinrichtung (7) zum Erfassen der Temperatur der Trommel (1a, 1b) und des Kopfes (13),
- einer in der Nähe des Kopfes (13) vorgesehenen Kondensationserfassungseinrichtung (5) zum Erfassen von Kondensation auf der Trommel (1a, 1b) und auf dem Kopf (13),
- einem Strahlungsheizgerät (9) zum Heizen der Trommel (1a, 1b) und des Kopfes (13), und
- einer Steuereinrichtung (15), die so geschaltet ist, daß sie auf die Temperaturerfassungseinrichtung (7) und die Kondensationserfassungseinrichtung (5) anspricht sowie die Ladeeinrichtung (2, 3) und das Strahlungsheizgerät (9) betätigt,
- wobei die Steuereinrichtung (15) das Strahlungsheizgerät (9) aktiviert und gleichzeitig die Ladeeinrichtung (2, 3) am Aufbringen des Speichermediums hindert oder bewirkt, daß die Ladeeinrichtung (2, 3) das Speichermedium abnimmt, wenn die Kondensationserfassungseinrichtung (5) Kondensation erfaßt, jedoch
- dann, wenn die Kondensationserfassungseinrichtung (5) keine Kondensation erfaßt, aber die Temperaturerfassungseinrichtung (7) eine Temperatur unter einer vorbestimmten Temperatur ermittelt, die Steuereinrichtung (15) das Strahlungsheizgerät (9) aktiviert, ohne die Ladeeinrichtung (2, 3) am Aufbringen des Speichermediums zu hindern oder zu bewirken, daß die Ladeeinrichtung (2, 3) das Speichermedium abnimmt.

2. Gerät zum Verhindern von Kondensation nach Anspruch 1, wobei die vorbestimmte Temperatur zwischen 0°C und +30°C liegt.

3. Gerät zum Verhindern von Kondensation nach Anspruch 1, wobei das Speichermedium ein Band ist.

## Revendications

1. Dispositif de prévention de la condensation comprenant :
un tambour (1a, 1b) ;
un moyen de chargement (2, 3) pour charger un support d'enregistrement sur ledit tambour et pour décharger ledit support d'enregistrement dudit tambour (1a, 1b) ;
une tête (13) pour écrire de l'information sur le support d'enregistrement et pour lire de l'information à partir du support d'enregistrement lorsque le support d'enregistrement est chargé sur ledit tambour (1a, 1b) ;
un moyen de détection de température (7) disposé au voisinage de ladite tête (13) pour détecter la température dudit tambour (1a, 1b) et de ladite tête (13) ;
un moyen de détection de condensation (5) disposé au voisinage de ladite tête (13) pour détecter la condensation sur le tambour (1a, 1b) et sur la tête (13) ;
un réchauffeur par rayonnement (9) pour réchauffer ledit tambour (1a, 1b) et ladite tête (13) ; et,
un moyen de commande (15) connecté, de façon à pouvoir réagir, audit moyen de détection de température (7) et audit moyen de détection de compensation (5) et connecté, de manière à pourvoir les mettre en oeuvre, audit moyen de chargement (2, 3) et audit réchauffeur par rayonnement (9) ;
ledit moyen de commande (15) actionnant ledit réchauffeur par rayonnement (9) et empêchant en même temps ledit moyen de chargement (2, 3) de charger ledit support d'enregistrement, ou faisant que ledit moyen de chargement (2, 3) décharge ledit support d'enregistrement, lorsque ledit moyen de détection de condensation (5) détecte de la condensation ; mais,
lorsque ledit moyen de détection de condensation (5) ne détecte aucune condensation, mais que ledit moyen de détection de température (7) détecte une température inférieure à une température prédéterminée, ledit moyen de commande (15) activant ledit réchauffeur par rayonnement (9) sans empêcher ledit moyen de chargement (2, 3) de charger ledit support d'enregistrement, et sans faire que ledit moyen de chargement (2, 3) décharge ledit support d'enregistrement.

2. Dispositif de prévention de condensation selon la revendication 1, dans lequel ladite température prédéterminée est située entre 0° C et +30° C.

3. Dispositif de prévention de condensation selon la revendication 1, dans lequel ledit support d'enregistrement est une bande.
